# EUROPEAN PATENT APPLICATION

(11) **EP 2 489 503 A1**
(43) Date of publication of application: **22.08.2012**
(21) Application number: 12000625.9
(22) Date of filing: 31.01.2012
(51) Int. Cl.: B32B 3/24, B32B 27/32, B29C 47/04

(54) **Netting with high friction surface and method of manufacture**

(30) Priority: 16.02.2011 US 201113028994
(71) Applicant: Conwed Plastics LLC, Minneapolis MN 55413 (US)
(72) Inventor: Thoen, Andrew J., Harris MN 55032 (US); Hakanson, Christopher P., Woodbury MN 55129 (US); Budde, Bradley J., Shakopee MN 55413 (US); Worthington, Chris E., St. Paul MN 55104 (US)
(74) Representative: Donné, Eddy

(57) **Abstract**

Netting (10) comprising an interconnected network comprising a plurality of coextruded strands (12, 16) which are integrally joined, the coextruded strands (12, 16) having at least a first (20) and a second layer (24), the first layer (20) including a first thermoplastic composition having at least two types of block copolymers, the second layer (24) being bonded to the first layer (20) and including a second thermoplastic composition differing from the first thermoplastic composition wherein the netting (10) has a friction angle ranging from 10 degrees to 40 degrees.

## Description

### BACKGROUND OF THE INVENTION

### 1. Field of the Invention

One or more embodiments of the present invention are related to netting with a high friction surface and a method of manufacture of same.

### 2. Background Art

Temporary non-skid surfaces, such as grocery retailer displays and backings to throw rugs have been made using polyvinylchloride (PVC) coated scrims on polyester fabric in order to have a high friction surface. These surfaces may also be foamed to produce an advantageous compressibility of the surface.

In general, PVC mats have relative softness resulting in desirable draping properties where the draping distance exceeds 1.75 inches when tested using a two inch drape and have relatively friction angles. But, PVC mats are relatively heavy because the PVC mats must be relatively thick to compensate for the relatively low structural strength resulting from the relative softness.

In certain applications, mats having a high friction surface that does not rely upon PVC are advantageous, avoiding discrepancies with product performance demands in the marketplace. In many applications, the PVC includes plasticizers to achieve the low tensile modulus needed to apply the scrim coating. Plasticizers may bloom to the surface degrading the usefulness of the mats.

### SUMMARY OF THE INVENTION

In order to provide a solution for the abovementioned and other disadvantages, the present invention provides a netting comprising an interconnected network comprising a plurality of coextruded strands which are integrally joined, the coextruded strands having at least a first and a second layer, the first layer including a first thermoplastic composition having at least two types of block copolymers, the second layer being bonded to the first layer and including a second thermoplastic composition differing from the first thermoplastic composition, wherein the netting has a friction angle ranging from 10 degrees to 40 degrees.

This is advantageous because it allows to avoid or reduce the use of PVC having the abovementioned disadvantages of limited strength and unwanted blooming of plasticizers.

In at least one embodiment, the present invention provides an extruded netting comprising an interconnected network including a plurality of coextruded strands integrally joined, the coextruded strands having a first layer including a first thermoplastic composition, a second layer bonded to the first thermoplastic layer and including a second thermoplastic composition. The netting also includes a third layer bonded to the second layer and spaced apart from the first layer. The third layer includes a third thermoplastic composition. The netting has a friction angle ranging from 10 degrees to 40 degrees.

In at least one embodiment, the first and third thermoplastic compositions have the same composition, i.e., are made of the same material. In at least one other embodiment, the first and third compositions have different compositions.

In at least one embodiment, the present invention provides an extruded netting comprising an interconnected network including a plurality of coextruded strands integrally joined, the coextruded strands having a friction layer including a first thermoplastic composition having at least two types of block copolymers, a support layer bonded to the friction layer and including a second thermoplastic composition differing from the first thermoplastic composition, wherein the friction layer of the netting has a friction angle ranging from 10 degrees to 40 degrees.

The invention also provides a method of making a netting using an extruder having a reciprocating die, the method comprising the steps of: coextruding a plurality of machine-direction strands and a plurality of cross-direction strands, the coextruded strands having a first layer including a first thermoplastic composition, a second layer bonded to the first thermoplastic layer and including a second thermoplastic composition ; and bonding integrally the machine-direction strands with the cross-direction strands in the reciprocating die, when the strands are melted, to form a molten netting; solidifying the molten netting to form the netting, wherein the thermoplastic compositions and/or the processing conditions and/or the geometrical characteristics of the netting (10) are selected so that the netting (10) has a friction angle ranging from 10 degrees to 40 degrees

This is a simple and cheap method of manufacturing such a netting.

In at least one embodiment, the present invention provides a method of making a netting in an extruder having a reciprocating die. The method comprises the steps of coextruding a plurality of machine-direction strands and a plurality of cross-direction strands. The coextruded strands have a first layer including a first thermoplastic composition and a second layer bonded to the first thermoplastic layer. The second layer includes a second thermoplastic composition. The netting has a third layer bonded to the second layer and spaced apart from the first layer. The third layer includes a third thermoplastic composition, wherein the netting has a friction angle ranging from 10 degrees to 40 degrees. The method further comprises the step of bonding integrally the machine-direction strands with the cross-direction strands in the reciprocating die, when the strands are melted, to form a molten netting. The method further includes solidifying the molten netting to form the netting. The method further includes winding the netting into a roll situating a first netting segment adjacent to a second netting segment, the netting being adapted such that a blocking force between the first and second netting segments is less than the tensile strength of the netting.

### BRIEF DESCRIPTION OF THE DRAWINGS

FIGURE 1 is a fragmentary isometric perspective view of a plastic netting according to at least one embodiment; and

FIGURE 2 is a fragmentary sectional view taken along line 2-2 of Figure 1.

### DETAILED DESCRIPTION OF THE PREFERRED EMBODIMENT(S)

As required, detailed embodiments of the present invention are disclosed herein; however, it is to be understood that the disclosed embodiments are merely exemplary of the invention that may be embodied in various and alternative forms. The figures are not necessarily to scale; some features may be exaggerated or minimized to show details of particular components. Therefore, specific structural and functional details disclosed herein are not to be interpreted as limiting, but merely as a representative basis for teaching one skilled in the art to variously employ the present invention.

Except where expressly indicated, all numerical quantities in the description and claims, indicated amounts of material or conditions of reaction and/or use are to be understood as modified by the word "about" in describing the broadest scope of the present invention. Practice within the numerical limits stated should be desired and independently embodied. Ranges of numerical limits may be independently selected from data provided in the tables and description. The description of the group or class of materials as suitable for the purpose in connection with the present invention implies that the mixtures of any two or more of the members of the group or classes are suitable. The description of constituents in chemical terms refers to the constituents at the time of addition to any combination specified in the description and does not necessarily preclude chemical interaction among constituents of the mixture once mixed. The first definition of an acronym or other abbreviation applies to all subsequent uses herein of the same abbreviation and applies *mutatis mutandis* to normal grammatical variations of the initially defined abbreviation. Unless expressly stated to the contrary, measurement of a property is determined by the same techniques previously or later referenced for the same property. Also, unless expressly stated to the contrary, percentage, "parts of," and ratio values are by weight, and the term "polymer" includes "oligomer," "copolymer,""terpolymer,""pre-polymer," and the like.

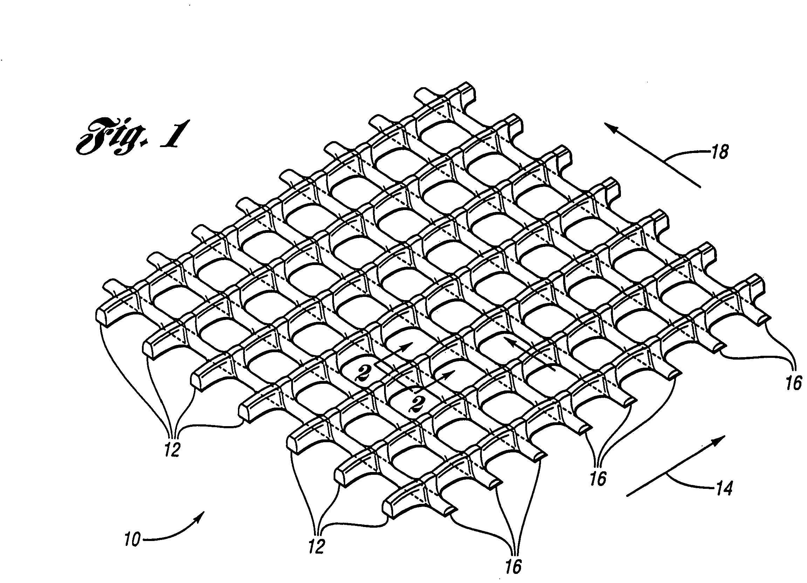

Referring to Figure 1, a perspective view of an exemplary plastic netting 10 is illustrated. Netting 10 includes strands 12 extending in a machine direction 14 and strands 16 extending in a cross-direction 18. As depicted in Figure 1, the cross-direction 18 extends in a generally crosswise or transverse direction relative to the machine direction 14. Although the embodiment depicted in Figure 1 portrays a substantially square netting configuration, it should be appreciated that other netting configuration shapes such as a rectangle, a rhombus, a trapezoid, a parallelogram, a diamond, or a twill may be used without exceeding the scope or spirit of the embodiment.

In at least one embodiment, netting 10 has a tensile modulus ranging from 165 MPa (24,000 Ibf/in²) to 241 MPa (35,000 lbf/in²) in the machine direction when measured according to ASTM D-882 using the 1% secant measurement method. In another embodiment, the tensile modulus of the netting ranges from 172 MPa (25,000 lbf/in² ) to 207 MPa (30,000 lbs/in² ) in the machine direction.

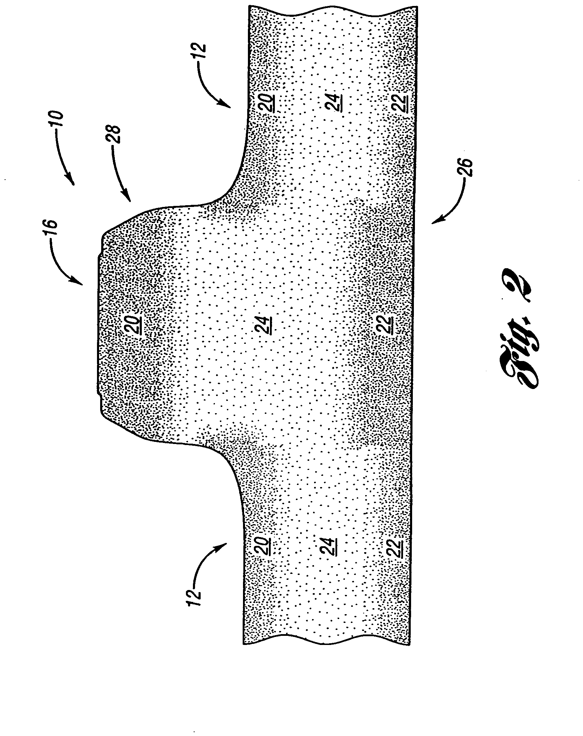

Turning now to Figure 2, a fragmentary sectional view of plastic netting 10 taken along line 2-2 of Figure 1 is schematically illustrated. Netting 10 includes a first outer layer 20, an opposed to and spaced apart second outer layer 22, and a core layer 24 disposed therebetween. A smooth surface 26 is an externally facing surface of second outer layer 22. A non-flat surface 28 is an externally facing surface of first outer layer 20.

Each of the layers 20, 22, and 24 is comprised of a polymer resin to form either strand 12 and/or 16. It should be understood that the outer layers 20 and 22 may include identical, similar, or different polymer resins without exceeding the scope and spirit of the embodiment. It should be further understood that strand 12 may have a different composition or the same composition in one or more of layers 20, 22, and/or 24 than the composition of strand 16. It should also be understood that while layers are described above in terms indicating distinct layers, in certain embodiments, the boundaries between layers 20, 22, and/or 24 may be relatively indistinct having one or more transition zones between layers, one or more gradients between layers, and/or mixtures of either the first and second thermoplastic compositions and/or the second and third thermoplastic compositions.

According to one technology, a three-layer netting formed from strands by an extrusion process is provided in U.S. Patent Application Numbers 2007/0199654 and 2007/0056899, which are herein incorporated by reference in their entirety. According to one technology, an exit passage of an extrusion die includes reciprocating strikers and raised and spaced lands for forming strands such as strands 12 and 16. For instance, U.S. Patent Nos. 4,190,692, 4,656,075 and 4,755,247 as well as U.S. Patent Application Number 2007/0056899 each provide such a die and methods of use. These patents are herein incorporated by reference in their entirety.

In at least one embodiment, the second outer layer 22 is formed in an extrusion process in which layer 22 is flattened in the die land and when it exits the die. The layer 22 is cooled by passing along a mandrel. Thus, the second outer layer 22 is formed to be a relatively flat surface 26 in which the second layer 22 of strand 12 and the second layer of strand 16 are substantially co-planar. By contrast, in at least one embodiment, the first outer layer 20 is cooled by exposure to a water bath, and therefore has contours typically associated with an integral joint between the machine-direction strand and the cross-direction strand. The first outer layer 20 is characterized as the non-flat surface 28in which a center of mass of the first layer 20 of strand 12 and a center of mass of the first layer of strand 16 are substantially non-planar.

First outer layer 20, in at least one embodiment, is formed of any suitable polymer resin, such as a thermoplastic composition. The thermoplastic composition includes a non-ethylenically saturated thermoplastic composition. In at least one embodiment, thermoplastic compositions in layers 20, 22, and/or 24 are free of PVC. An example of the non-ethylenically saturated thermoplastic composition includes an elastomer, such as a block copolymer composition or a block copolymer blend. Non-limiting examples of components of a block copolymer blend may include a thermoplastic elastomer, a di-block copolymer, a star-block copolymer, a cyclic olefin copolymer, a styrene/polyolefin block copolymer, a styrenic di-block copolymer, a styrenic tri-block copolymer, an olefin block copolymer, a dimethylsiloxane olefin block copolymer, natural rubber compounds, and oil-plasticized styrenic block copolymers with a hydrogenated midblock of styrene-ethylene/butylene-styrene (SEBS) or styrene-ethylene/propylene-styrene (SEPS).

In certain embodiments, first outer layer 20 is formed of a first thermoplastic composition including a blend of the styrenic tri-block copolymer and the olefin block copolymer.

In at least one embodiment, the styrenic block copolymer is present in the first thermoplastic composition in an amount ranging from 45 wt.% to 80 wt.% of the first thermoplastic composition. In another embodiment, the styrenic tri-block copolymer is present in an amount ranging from 50 wt.% to 70 wt.% of the first thermoplastic composition.

In another embodiment, the olefin block copolymer is present in the first thermoplastic composition in an amount ranging from 20 wt.% to 55 wt.% of the first thermoplastic composition. In another embodiment, the olefin block copolymer is present in an amount ranging from 30 wt.% to 50 wt.% of the thermoplastic composition.

It is known that the use of certain olefin block copolymers assist in compatibilizing block copolymers with polyolefins, but can also weaken the melt strength of a melt during extrusion relative to the melt strength in the absence of these olefin block copolymers. It has been found that in at least one embodiment that the first thermoplastic composition provides an unexpectedly good processible blend while forming netting having cohesive failure between outer layer 20 and/or 22 and core layer 24. In certain embodiments, failure between outer layer 20 and/or 22 and core layer 24 may be a mixed failure including both cohesive and adhesive failure. In at least one embodiment, the fraction of the interface between outer layer 20 and/or 24 and core layer 24 experiencing cohesive failure may range from 50% of the interfacial area between the layers to 100% of the interfacial area. In another embodiment, the fraction of the interface between outer layer 20 and/or 24 and core layer 24 experiencing cohesive failure may range from 75% of the interfacial area between the layers to 100% of the interfacial area.

While the styrenic tri-block copolymer and the olefin block copolymer have been described above as being the primary components of the first thermoplastic composition, it should be understood that any suitable elastomer may be used. Non-limiting examples of suitable other elastomers include, but are not limited to, biopolymer thermoplastic elastomers, co-polyester thermoplastic elastomers, thermoplastic polyurethane (TPU) and thermoplastic vulcanizate (TPV). It should be further understood that while the composition embodiments have been disclosed above for the first thermoplastic composition for use in the first outer layer 20, the disclosed first thermoplastic compositions may be suitable for other thermoplastic compositions disclosed for other layers in strands 12 and/or 16, such as the second outer layer 22.

In at least one embodiment, the first thermoplastic composition may have a friction angle ranging from 10 degrees to 40 degrees when measured using a sled-to-net angle of repose method.In another embodiment, the first thermoplastic composition may have a friction angle ranging from 18 degrees to 32 degrees. In yet another embodiment, the first thermoplastic composition may have a friction angle ranging from 22 degrees to 28 degrees. The sled-to-net test has the net placed on a flat metal platform which is attached to a hydraulic lift. A protractor with a magnetic base is attached to the platform. On the net, a 907 gr (two pound), flat-bottom stainless steel metal sled is set at the top. The contact surfaces are the test net and the stainless steel metal. The platform is then raised at an angle. The angle at which the sled slides down the netting surface is recorded as the friction angle. The lower the friction angle at which the netting slides correlates to a relatively lower coefficient of friction of the netting. If only one side of the netting has a friction surface, the friction surface is in contact with the sled.

When segments of netting are situated adjacent to one another, sticking between the segments may occur. This sticking effect is commonly referred to as blocking. Blocking is generally not desirable because when the blocking force approaches or exceeds the tensile force at break of the thermoplastic composition, the netting may break when being unwound for conversion into commercially-usable sizes or when being commercially used.

Anti-blocking techniques include a physical anti-blocking technique using a material to roughening the interface between the adjacent netting segments creating an air gap or a technique to limit relatively easy diffusion and entanglement across the interface by polymer chains of the thermoplastic compositions.

In at least one embodiment, the first thermoplastic composition used for one or both of the outer layers 20 and/or 22 may also include a physical anti-block additive masterbatch. Any suitable physical anti-block additive masterbatch may be used. Non-limiting examples of the anti-block additive masterbatches include, but are not limited to, a talc concentrate situated in a low density polyethylene (LDPE) carrier, a silica in a linear low density polyethylene (LLDPE) carrier, and a calcium carbonate in a polyolefin carrier, such as polypropylene (PP).

In at least one embodiment, the anti-block additive masterbatch is present in an amount ranging from 0.25 to 4 wt.% of the first thermoplastic composition of one or both outer layers 20 and/or 22. In another embodiment, the anti-block additive masterbatch is present in an amount ranging from 0.5 wt.% to 2 wt.% of the first thermoplastic composition of one or more of the outer layers 20 and/or 22.

In at least one embodiment, the first thermoplastic composition suitable for use as one or both of the outer layers 20 and/or 22 relatively has a tear strength ranging from 1.21 MPa (175 lbf/in²) to 2.07 MPa (300 lbf/in² ) as measured according to ASTM D-624. In another embodiment, the first thermoplastic composition may have a tear strength ranging from 1,38 MPa (200 lbf/in² ) to 1.90 MPa (275 lbf/in²).

In certain applications, such as for use in making articles that may come in contact with humans or food, the first thermoplastic composition may be adapted to comply with FDA Chapter 21 regulations, such as 21 C.F.R. §177.1520 olefin polymer paragraph (c) 3.2a.

In at least one embodiment, to provide advantageous compressibility, the thermoplastic composition used for outer layers 20 and/or 22 may have a compression set ranging from 12 to 18% when measured at 21°C according to ASTM D-395. In another embodiment, the thermoplastic composition may have a compression set of 14%.

In one embodiment, the core layer 24 is formed of any suitable polymer resin, such as a second thermoplastic composition. The second thermoplastic composition in core layer 24 primarily provides support for the first thermoplastic composition having the high coefficient of friction in outer layers 20 and/or 22.

In at least one embodiment, the second thermoplastic composition for the core layer 24 includes a polyolefin material. Non-limiting examples of polyolefin include linear low density polyethylene (LLDPE), low density polyethylene (LDPE), very low density polyethylene (VLDPE), high density polyethylene (HDPE), polypropylene (PP), nylon, polylactic acid, polyhydroxybutyrate, PHB-co-hydroxyvalerate, long fiber thermoplastics. It should be understood that the thermoplastic compositions may be formed of virgin or recycled products.

In another embodiment, the second thermoplastic composition has a melt flow index ranging from 0.75 gms per 10 minutes to 10 gms per 10 minutes when measured according to ASTM D-1238. In another embodiment, the melt flow index of the second thermoplastic composition ranges from 0.9 gm per 10 minutes to 5 gms per 10 minutes. In another embodiment, the melt flow index of the second thermoplastic composition ranges from 1 gm per 10 minutes to 2 gms per 10 minutes.

In at least one embodiment, the absolute difference of melt flow indices between the first outer layers 20 or the second outer layer 22 and the core layer 24 ranges between 0 and 9 gms per 10 minutes. In at least one embodiment, the absolute difference of melt flow indices between the first outer layers 20 or the second outer layer 22 and the core layer ranges between 0 and 5 gms per 10 minutes.

The second thermoplastic composition for the core layer 24 may provide support for the thermoplastic compositions of layers 20 and/or 22, and have a greater tensile modulus than the relatively high friction thermoplastic compositions of layers 20 and/or 22. In at least one embodiment, the second thermoplastic composition for core layer 24 has a tensile modulus ranging from 165 MPa (24,000 lbf/in²) to 241 MPa (35,000 lbf/in²)in the machine direction when measured according to ASTM D-882 using the 1% secant measurement method. In another embodiment, the tensile modulus of the second thermoplastic composition for core layer 24 ranges from MPa (25,000 lbf/in² ) to 207 MPa (30,000 lbs/in² ) in the machine direction.

Core layer 24 may provide a dominant portion of the tensile modulus of the netting 10 and may be correlated to the tensile elongation at yield of the netting 10. In at least one embodiment the core layer 24 comprises 30 wt.% to 90 wt.% of the netting 10. In another embodiment, the core layer 24 comprises 50 wt.% to 85 wt.% of the netting 10. In yet another embodiment, the core layer 24 comprises 60 wt.% to 80 wt.% of the netting 10. The layers 20 and/or 22 may provide the remainder of netting 10. For instance, in at least one embodiment, layers 20 and 22 each comprise 5 wt.% to 35 wt.% of the netting 10. In another embodiment, layers 20 and 22 each comprise 7.5 wt.% to 25 wt.% of the netting 10. In yet another embodiment, layers 20 and 22 each comprise 10 wt.% to 20 wt.% of the netting 10.

In at least one embodiment, the tensile elongation at yield of the netting 10 ranges from 1% to 25%, when measured according to ASTM D-1708. In another embodiment, the tensile elongation at yield of the netting 10 ranges from 3% to 15%. In yet another embodiment, the tensile elongation at yield of the netting 10 ranges from 4% to 12%.

In another embodiment, the netting 10 has a tensile strength at break ranging from 34.4 MPa (5,000 lbf/in² ) to 82.7 MPa (12,000 lbf/in² ) when measured according to ASTM D-412. It should be understood that this tensile strength at break for the netting 10 may be achieved or modified by orienting the strands or the netting either uniaxially or biaxially without exceeding the scope and spirit of the embodiments.

It is advantageous to have netting 10 follow the contour of an article which it covers. In at least one embodiment, the ability to conform to the article, such as corners on a shelf, as measured by a drape distance ranges from 6.35 mm (0.25 inches) to 50.8 mm (2 inches). In another embodiment, the drape distance ranges from 12.7 mm (0.5 inches) to 38.1 (1.5 inches). In another embodiment, the drape distance ranges from 19.05 mm (0.75 inches) to 31.75 (1.25 inches). The drape distance is measured on a 76.2 mm x 2235.2 mm ( 3" x 8" ) netting specimen. The specimen is placed at the edge of a horizontal surface, such as a countertop with squared edges. The specimen is extended beyond the horizontal surface by 50.8 mm (two inches). The portion of the specimen no longer supported the horizontal surface will generally drape downwards. Using a carpenter's square held flat against the horizontal surface measure the drape distance where the specimen intersects the perpendicular or vertical portion of the square.

It is advantageous to have the first outer layer 20 be well bonded to the core layer 24, and to have the core layer 24 well bond to the second outer layer 22. In at least one embodiment, bonding of each of the pairs of layers above occurs by heat bonding. Heat bonding occurs when the pair of layers is sufficiently heated to bond together in a molten state, which may include a softened state. The melt temperature of any of the thermoplastic compositions can refer to any temperature wherein the thermoplastic composition begins to melt. It should be appreciated that a mechanical bond can be created between various thermoplastic compositions without the component materials reaching their melt temperature. Indeed, one thermoplastic composition does not necessarily need to melt to adhere to another thermoplastic composition. Instead, the temperature of thermoplastic compositions, in general, may be elevated such that the component materials reach a tackified state, so that adhesion between two thermoplastic compositions may take place. This elevated temperature may be referred to as the adhesion temperature.Advantageously, the first, second, and third thermoplastic compositions may be selected so the first, second, and third thermoplastic compositions have degradation temperatures that are greater than the highest adhesion temperature of the first, second, and third thermoplastic compositions.

In at least one embodiment, the absolute difference in adhesion temperatures between the first, second, and third thermoplastic compositions ranges from 0 °C to 50°C. In at least one embodiment, the absolute difference in adhesion temperatures between the first, second, and third thermoplastic compositions ranges from 0 °C to 35°C.

In at least one embodiment, compressibility of layers 20, 22, and/or 24 may include creating a foam with a chemical foaming agent. In at least one embodiment, an endothermic chemical blowing agent in a blowing agent masterbatch is used.In at least one embodiment, the amount of chemical blowing agent ranges from 0.25 wt.% to 5 wt.% of the thermoplastic composition of any of the layers in which it is used. In another embodiment, the amount of chemical blowing agent ranges from 0.5 wt.% to 2 wt.% of the thermoplastic composition of any of the layers in which it is used. It should be understood that while an endothermic chemical foaming agent has been described above, any suitable blowing agent may be used. Non-limiting examples of blowing agents may include an exothermic chemical blowing agent, or a mechanical foaming process such as a direct gas injection foaming process of the thermoplastic composition.

In certain embodiments, other additives may be blended into the thermoplastic compositions including, but not limited to, a colorant pigment, a colorant master batch, a heat stabilizer, a processing aid, a slipping agent, a flame retardant, a functional filler, a reinforcement, a plasticizer, a tackifier, and/or an inert filler.

In at least one embodiment, the compositions of outer layers 20 and 22 differ forming a third layer, such as outer layer 22, bonded to the core layer 24 and opposed and spaced apart from the first layer, such as outer layer 20. The third layer includes a third thermoplastic composition. In another embodiment, the netting 10 having the third layer is selected from a group consisting of a coextrusion schedule including layer structures such as an A layer, a B layer, and another A layer (A/B/A); an A layer, B layer, and C layer (A/B/C); an A layer, a second A layer, and a B layer (A/A/B); or an A layer, a B layer, and a second B layer (A/B/B), where the letter designation represents differing thermoplastic composition of the layer. It is further understood, that there may be a plurality of layers and compositions beyond the illustrative coextrusion schedules above, without exceeding the scope or spirit of the embodiment. For example, core layer 24 may include a plurality of layers of networked domains and/or interpenetrating networks. In another example, outer layers 20 and/or 22 may include a virgin material layer on the external surface and a bulk layer of recycled material situated between the virgin material layer and core layer 24.

One suitable method of making the netting 10 in an extruder having a reciprocating die includes the steps of co-extruding a plurality of machine-direction strands and a plurality of cross-direction strands. The method further comprises bonding integrally the machine-direction strands with the cross-direction strands in the extruder to form a molten netting, which may include a softened netting. The method further includes cooling the netting to form a solid netting. The method further includes winding the solid netting into a roll situating a first netting segment adjacent to a second netting segment. The netting being adapted such that a blocking force between the first and second netting segments is less than the tensile strength of the netting.

In at least one embodiment, the method produces netting wherein the machine-direction strands are substantially perpendicular to the cross-direction strands such that the netting is configured into a substantially square netting.

In at least one other embodiment, the method forms netting wherein the machine-direction strands are spaced apart by a distance ranging from 2.54 mm (0.1 inches) to 12.7 mm (0.5 inches). In yet another embodiment, the machine-direction strands are spaced apart by a distance ranging from 5.08 mm (0.2 inches) to 25.4 mm (1 inch).

In at least one other embodiment, the method forms netting wherein the cross-direction strands are spaced apart by a distance ranging from 2.54 mm (0.1 inches) to 12.7 mm (0.5 inches). In yet another embodiment, the cross-direction strands are spaced apart by a distance ranging from 5.08 mm (0.2 inches) to 25.4 mm (1 inch).

In at least one embodiment, the netting 10 has an average thickness ranging from 1.27 mm (0.05 inches) to 30.48 mm (1.2 inches). In yet another embodiment, the average thickness of the netting ranges from 2.54 mm (0.1 inches) to 15.24 (0.6 inches).

In at least one embodiment, machine-direction strands 12 used in the netting have an average thickness ranging from 1.27 mm (0.05 inches) to 5.08 mm (0.2 inches). In another embodiment, strands used in the netting have average thickness ranging from 2.54 mm (0.1 inches) to 15.24 (0.6 inches).In at least one embodiment, cross-direction strands 16 used in the netting have an average thickness ranging from 1.27 mm (0.05 inches) to 12.7 mm (0.5 inches). In another embodiment, cross-direction strands 16 have an average thickness ranging from 2.54 mm (0.1 inches) to 6.35 mm (0.25 inches). In yet another embodiment, cross-direction strands 16 are thinner than machine-direction strands 12.

### Examples

### Counter Example 1

A styrenic block copolymer, Monprene^{®} MP-2156 supplied by Teknor Apex^{®} Company, Pawtucket, Rhode Island, is found to generally elongate easily with very low tensile modulus. The netting produced using the thermoplastic elastomer exhibits blocking when produced by a mono-layer extruded netting structure. Further, the extrusion melt is observed to fracture using the reciprocating die described in U.S. Patent No. 4,755,247 which is incorporated herein by reference. Conversion of large master rolls into smaller, commercially saleable rolls resulted in netting that became stretched during a rewind process of the netting onto a journal roll exhibits an incorrect length when unwound.

The mono-layer netting has poor structural integrity that may be associated with its low tensile modulus and elongation property. As a consequence, potential end users have difficulty cutting the product using typical scissors or knives. In addition, users find it difficult to adjust the placement of the netting on surfaces since the netting had no structural integrity. Moving an object on top of the netting results in the netting rolling up into a ball, even if the object is raised and only very slight contact with the netting is made.

### Counter Example 2

An application for a grocery shelf mat involves testing a number of thermoplastic elastomers until finding a hydrogenated styrenic block copolymer having the highest coefficient of friction of the compounds tested. Although having a melt flow rate of 1.5 gms per 10 minutes according to ASTM D-1238, which is typical of an extrusion polymer, the high friction surface leads to marginal processing behavior and insufficient melt strength. Melt fracture occurs. The thermoplastic composition having the maximum coefficient of friction is found to fracture in the melt phase during processing using the reciprocating extruder with a die set capable of integrally joining strands into an interconnected network within the die. Melt fractures are common using certain hydrogenated styrenic block copolymers in an extruder having a reciprocating die. Another undesirable processing issue included increased die drool.

### Example 1

A three-layer, coextruded netting is produced with a top and bottom layer of the netting including 58.5% of Teknor Apex grade MP-2156, 35 wt.% of Dow^{®} Infuse^{®} Grade 9107.10, 1.5 wt.% of Standridge^{®} SCC 29584 foam concentrate, 1 wt.% Techmer^{®} TPM 1901 anti-block additive, and 2 wt.% Standridge green colorant masterbatch SCC 09SAM0996.

Bonded to the top and bottom layers is a middle layer having polyolefin material of linear low density polyethylene (LLDPE) supplied by Exxon Mobile^{®} as 3001.63. A chemical foaming additive, Grade SCC29584 from Standridge Color Corporation is added at 1.5wt.% to foam the thermoplastic in the middle layer. A dark green colorant is added as well. The LLDPE grade provides improved characteristics to the netting structure such as tensile strength, tensile modulus, and reduced cost. The LLDPE is compatible with the thermoplastic elastomer in the top and bottom layers of the netting. Using LLDPE for the middle layer and increasing the modulus of the overall netting results in considerably less stretchiness and elongation, which makes handling the netting much easier during the wind and rewind or conversion processing.

The three-layer, co-extruded netting structure solves the issues regarding the elongation that is relatively uncontrolled, the blocking of the roll and the rolling up of the netting when moving an object on top of the netting. When the middle layer has relatively high tensile modulus and relatively low elongation percentage at break, the finished netting product is much easier to handle during secondary conversion processes. Netting three-layer material on master rolls which are converted to smaller commercially-saleable rolls does not stretch out and does not exhibit severe roll blocking. The three-layer netting is much easier to cut with a knife or scissors. Placement of certain light weight objects is relatively more adjustable without causing the netting to roll up into a ball.

### Example 2

The high friction, three-layer co-extruded netting structure of Example 1 is biaxially oriented using a tenter. The oriented netting structure results in reduced product weight, reduced costs, improved tensile strength of the netting, improved tensile modulus of the netting and offers a wider width of the netting.

### Counter Example 3

The three-layer coextruded netting of Example 1 is produced using a chemically-foamed polypropylene as the middle layer in place of the linear low density polyethylene. The foamed polypropylene does not process as well and results in randomly broken or stretched machine-direction strands.

### Example 3

The three-layer coextruded netting of Example 1 is processed with polypropylene which has not been foamed as the middle layer instead of the LLDPE. The netting processed well and did not experience melt fracture.

### Example 4

The three-layer coextruded netting of Example 1 is produced using low density polyethylene (LDPE) in place of the LLDPE in the middle layer. The LDPE processed well and did not experience any melt fractures.

While embodiments of the invention have been illustrated and described, it is not intended that these embodiments illustrate and describe all possible forms of the invention. Rather, the words used in the specification are words of description rather than limitation, and it is understood that various changes may be made without departing from the spirit and scope of the invention.

## Claims

1. Netting (10) comprising an interconnected network comprising a plurality of coextruded strands (12, 16) which are integrally joined, the coextruded strands (12, 16) having at least a first (20) and a second layer (24), the first layer (20) including a first thermoplastic composition having at least two types of block copolymers, the second layer (24) being bonded to the first layer (20) and including a second thermoplastic composition differing from the first thermoplastic composition wherein the netting (10) has a friction angle ranging from 10 degrees to 40 degrees.

2. Netting (10) according to claim 1, **characterized in that** the first layer (20) is a friction layer and the second layer (24) is a support layer.

3. Netting (10) according to claim 1 or 2, **characterized in that** it comprises a third layer (22) bonded to the second layer (24) and spaced apart from the first layer (20), the third layer including a third thermoplastic composition.

4. Netting (10) according to any of the previous claims, **characterized in that** the first, second, and third thermoplastic compositions are non-ethylenically saturated thermoplastic compositions.

5. Netting (10) according to any of the previous claims, **characterized in that** the netting (10) is stretchable in a range of 1% to 25% before being permanently deformed.

6. Netting (10) according to any of the previous claims, **characterized in that** the first thermoplastic compositions and, if present, the third thermoplastic composition, is a blend of a styrenic tri-block copolymer and an olefin block copolymer.

7. Netting (10) according to claim 6, **characterized in that** the olefin block copolymer is present in an amount ranging from 30 wt.% to 50 wt.% of the thermoplastic composition or compositions.

8. Netting (10) according to any of the previous claims, **characterized in that** the second thermoplastic composition has a tensile modulus ranging from 165 MPa to 241 MPa.

9. . Netting (10) according to any of the previous claims, **characterized in that** the third thermoplastic composition is the same as the first thermoplastic composition forming netting (10) having an A/B/A layer structure.

10. Netting (10) according to any of the claims 1 to 8, **characterized in that** the third plastic composition differs from the first thermoplastic composition forming netting (10) having an A/B/C layer structure.

11. Netting (10) according to any of the previous claims, **characterized in that** the first thermoplastic composition further comprises an anti-block additive masterbatch present in an amount ranging from 0.25 wt.% to 4 wt.% of the first thermoplastic composition.

12. A method of making a netting (10) using an extruder having a reciprocating die, the method comprising the steps of: coextruding a plurality of machine-direction strands (12) and a plurality of cross-direction strands (16), the coextruded strands (12, 16) having a first layer (20) including a first thermoplastic composition, a second layer (24) bonded to the first thermoplastic layer and including a second thermoplastic composition, ; and
bonding integrally the machine-direction strands (12) with the cross-direction strands (16) in the reciprocating die, when the strands (12, 16) are melted, to form a molten netting;
solidifying the molten netting to form the netting (10);
wherein the thermoplastic compositions and/or the processing conditions and/or the geometrical characteristics of the netting (10) are selected so that the netting (10) has a friction angle ranging from 10 degrees to 40 degrees

13. A method according to claim 12, **characterized in that** the method further comprises the step of winding the netting (10) into a roll, situating a first netting segment adjacent to a second netting segment, wherein the thermoplastic compositions and/or the processing conditions and/or the geometrical characteristics of the netting (10) are selected so that a blocking force between the first and second netting segments is less than the tensile strength of the netting (10).

14. Method according to claim 12 or 13, **characterized in that** the coextruded strands (12,16) have a third layer (22) bonded to the second layer (24) and spaced apart from the first layer (20), the third layer (22) including a third thermoplastic composition.

15. Method according to any one of claims 12 to 14, **characterized in that** the first, second, and third thermoplastic compositions have degradation temperatures that are higher than the highest adhesion temperature of the first, second, and third thermoplastic compositions.
